# EUROPÄISCHE PATENTANMELDUNG

(11) **EP 4 224 678 A1**
(43) Veröffentlichungstag der Anmeldung: **09.08.2023**
(21) Anmeldenummer: 22155271.4
(22) Anmeldetag: 04.02.2022
(51) Int. Cl.: H02K 1/24, H02K 29/03, H02K 19/10, H02K 19/22

(54) **ROTORBLECHPAKET FÜR EINE FREMDERREGTE ELEKTRISCHE SYNCHRONMASCHINE MIT VERBESSERTEM DREHMOMENTVERLAUF**

(71) Anmelder: Valeo eAutomotive Germany GmbH, 91056 Erlangen (DE)
(72) Erfinder: Dotz, Boris, 97616 Bad Neustadt a.d.Saale (DE)
(74) Vertreter: Valeo Powertrain Systems

(57) **Zusammenfassung**

Es wird ein Rotorblech (5) für ein Rotorblechpaket (4) eines Rotors (2, 2a..2d) einer fremderregten elektrischen Synchronmaschine (1) angegeben, welches einen ringförmigen Innenteil (15) mit mehreren sternförmig nach außen weisenden Fortsätzen (16) umfasst, wobei jeder Fortsatz (16) einen an den Innenteil (15) anschließenden Basisteil (17) und einen daran anschließenden breiteren Kopfteil (18) aufweist. Dabei sind zumindest einige der Fortsätze (16) oder zumindest einige der Kopfteile (18) asymmetrisch über den Umfang des Rotorblechs (5) verteilt. Darüber hinaus werden ein Rotorblechpaket (4) mit mehreren solchen Rotorblechen (5), ein Rotor (2, 2a..2d) mit einem solchen Rotorblechpaket (4), eine fremderregte elektrische Synchronmaschine (1) mit eine solchen (2, 2a..2d) Rotor sowie ein Fahrzeug (19) mit einer solchen fremderregten elektrischen Synchronmaschine angegeben (1).

## Beschreibung

### TECHNISCHES GEBIET

Die Erfindung betrifft ein Rotorblech für ein Rotorblechpaket eines Rotors einer fremderregten elektrischen Synchronmaschine, welches einen ringförmigen Innenteil mit mehreren sternförmig nach außen weisenden Fortsätzen umfasst, wobei jeder Fortsatz einen an den Innenteil anschließenden Basisteil und einen an den Basisteil anschließenden breiteren Kopfteil aufweist. Weiterhin betrifft die Erfindung ein Rotorblechpaket mit mehreren Rotorblechen der genannten Art, einen Rotor mit einem Rotorblechpaket der genannten Art, eine fremderregte elektrische Synchronmaschine mit einem Rotor der genannten Art sowie ein Fahrzeug mit einer fremderregten elektrischen Synchronmaschine der genannten Art.

### STAND DER TECHNIK

Die endliche Anzahl an Polen eines Rotors einer fremderregten elektrischen Synchronmaschine führt naturgemäß zu Schwankungen im Drehmomentverlauf beziehungsweise zu einer Neigung zum "Einrasten" bei bestimmten Drehwinkeln. Dies führt zu unerwünschten Vibrationen in den von einer solchen elektrischen Maschine angetriebenen Vorrichtungen. Um diese Drehmomentschwankungen zu beseitigen oder wenigstens zu verringern, ist es bekannt, das Rotorblechpaket der elektrischen Maschine zu schrägen. Dabei verlaufen die Pole beziehungsweise die genannten Fortsätze nicht in axialer Richtung, sondern folgen einer Schraubenlinie beziehungsweise einer Helix. Nachteilig ist dabei der relativ komplizierte Aufbau eines solchen Rotors. Insbesondere betrifft dies die Rotorwicklungen und deren Wicklungsdrähte, die bei einer solchen Bauweise ebenfalls schraubenförmig beziehungsweise helixförmig verlaufen, wodurch der Rotortechnisch nur aufwändig herstellbar ist.

### OFFENBARUNG DER ERFINDUNG

Eine Aufgabe der Erfindung ist es daher, ein verbessertes Rotorblech, ein verbessertes Rotorblechpaket, einen verbesserten Rotor, eine verbesserte fremderregte elektrische Synchronmaschine sowie ein verbessertes Fahrzeug anzugeben. Insbesondere soll ein Drehmomentverlauf der genannten elektrischen Maschine verbessert, das heißt geglättet werden, ohne die Herstellung der Rotorwicklung zu verkomplizieren.

Die Aufgabe der Erfindung wird mit einem Rotorblech der eingangs genannten Art gelöst, bei welchem zumindest einige der Fortsätze oder zumindest einige der Kopfteile asymmetrisch (beziehungsweise ungleichmäßig) über den Umfang (beziehungsweise entlang des Umfangs) des Rotorblechs verteilt sind. Mit anderen Worten sind zumindest einige der Fortsätze oder zumindest einige der Kopfteile um unterschiedliche Winkel um die Rotationsachse des Rotorblechs oder Rotors gegeneinander verdreht und/oder verschoben. Insbesondere kann sich eine Asymmetrie auf die (radial verlaufenden) Mittel- oder Symmetrieachsen der Fortsätze oder der Kopfteile beziehen.

Dass die Fortsätze asymmetrisch über den Umfang des Rotorblechs verteilt sind, kann insbesondere so verstanden werden, dass die Symmetrieachse zumindest eines Fortsatzes mit der Symmetrieachse eines benachbarten Fortsatzes einen Winkel bildet, der ungleich dem Quotienten aus 360° und der Anzahl der Fortsätze des Rotorblechs ist.

Analog dazu kann die Aussage, dass die Kopfteile asymmetrisch über den Umfang des Rotorblechs verteilt sind, so verstanden werden, dass die Symmetrieachse zumindest eines Kopfteils mit der Symmetrieachse eines benachbarten Kopfteils einen Winkel bildet, der ungleich dem Quotienten aus 360° und der Anzahl der Kopfteile des Rotorblechs ist.

Dagegen kann eine Aussage, dass die Fortsätze beziehungsweise Kopfteile symmetrisch über den Umfang des Rotorblechs verteilt sind, so verstanden werden, dass die Symmetrieachse jedes Fortsatzes beziehungsweise Kopfteils mit der Symmetrieachse jedes benachbarten Fortsatzes beziehungsweise Kopfteils einen Winkel bildet, der gleich dem Quotienten aus 360° und der Anzahl der Fortsätze beziehungsweise Kopfteile des Rotorblechs ist.

Weiterhin wird die Aufgabe der Erfindung mit einem Rotorblechpaket für einen Rotor einer fremderregten elektrischen Synchronmaschine gelöst, welches mehrere aufeinander gestapelte Rotorbleche der genannten Art aufweist, wobei die Basisteile der Fortsätze jeweils deckungsgleich übereinanderliegen.

Darüber hinaus wird die Aufgabe der Erfindung durch einen Rotor für eine fremderregte elektrische Synchronmaschine gelöst, welcher eine Rotorwelle aufweist, ein auf der Rotorwelle angeordnetes Rotorblechpaket der genannten Art, sowie mehrere Erregerwicklungen, welche jeweils um mehrere Basisteile gewunden sind.

Zudem wird die Aufgabe der Erfindung durch eine fremderregte elektrische Synchronmaschine gelöst, welche einen Stator umfasst sowie einen im Stator angeordneten Rotor der oben genannten Art, der gegenüber dem Stator um die Rotationsachse des Rotors drehbar gelagert ist.

Schließlich wird die Aufgabe der Erfindung mit einem Fahrzeug gelöst, das einen Antriebsstrang und eine fremderregte elektrische Synchronmaschine der oben genannten Art aufweist, wobei die fremderregte elektrische Synchronmaschine zum Antreiben des Fahrzeugs vorgesehen ist.

Durch die vorgeschlagenen Maßnahmen kann ein Drehmomentverlauf der genannten elektrischen Maschine verbessert, das heißt geglättet werden. Auf eine Schrägung des Rotorblechpakets kann dabei verzichtet werden. Das heißt, die Pole oder Fortsätze können axial ausgerichtet werden, wodurch auch die Wicklungsdrähte in axialer Richtung verlaufen können. Mit anderen Worten kann ein Wicklungsdraht der Erregerwicklung trotz des asymmetrischen Aufbaus des Fortsatzes gerade ausgerichtet sein, wodurch das Herstellen der Erregerwicklung technisch vergleichsweise einfach ist. Die Glättung des Drehmomentverlaufs der elektrischen Maschine wird nicht durch eine Schrägung des Rotorblechpakets erzielt, sondern durch die Asymmetrie des Erregerfelds. Im Endergebnis kann der Drehmomentverlauf einer elektrischen Maschine verbessert beziehungsweise geglättet werden, ohne die Herstellung der Rotorwicklung gegenüber einer ungeschrägten Bauweise zu verkomplizieren.

Generell kann die Asymmetrie bei allen Kopfteilen eines Rotorblechs gleich groß sein, grundsätzlich kann sie aber auch unterschiedlich sein. Weiterhin können die Kopfteile in sich symmetrisch sein. Die Kopfteile können aber auch eine (in sich) asymmetrische Form aufweisen (und nicht bloß gegenüber dem Basisteil verdreht/verschoben sein).

Weitere vorteilhafte Ausgestaltungen und Weiterbildungen der Erfindung ergeben sich aus den Unteransprüchen sowie aus der Beschreibung in Zusammenschau mit den Figuren.

Von Vorteil ist es, wenn im Fall zumindest einiger asymmetrisch verteilter Fortsätze die Kopfteile (insbesondere alle Kopfteile) symmetrisch zum jeweiligen Basisteil angeordnet sind. Dadurch können die Fortsätze in sich symmetrisch aufgebaut werden, wodurch sich bezogen auf einen Fortsatz überall dieselben Verhältnisse im Hinblick auf die Erregerwicklung und die Feldführung ergeben. Daher können Optimierungen, welche einen Fortsatz oder Pol betreffen, praktisch ohne Aufwand auf den gesamten Rotor übertragen werden.

Von Vorteil ist es aber auch, wenn im Fall zumindest einiger asymmetrisch verteilter Fortsätze die Kopfteile (insbesondere alle Kopfteile) asymmetrisch zum jeweiligen Basisteil angeordnet sind. Dadurch kann eine Asymmetrie eines Pols oder Fortsatzes auf einfache Weise verstärkt werden.

Von Vorteil ist es weiterhin, wenn im Fall zumindest einiger asymmetrisch verteilter Kopfteile die (insbesondere alle) Basisteile symmetrisch um den Umfang angeordnet sind. Mit anderen Worten sind die Basisteile dann gleichmäßig über den Umfang verteilt, das heißt um jeweils denselben Winkel um die Rotationsachse des Rotorblechs oder Rotors gegeneinander verdreht. Demzufolge sind auch die Abstände zwischen benachbarten Basisteilen gleich. Insbesondere beziehen sich die obigen Aussagen dabei auf die (radial verlaufenden) Mittel- oder Symmetrieachsen der Basisteile. Durch diese Maßnahmen ist der Abstand zwischen den Erregerwicklungen gleich groß, wodurch diese gleichmäßig und dicht gewickelt werden können.

Dass die Basisteile symmetrisch um den Umfang des Rotorblechs angeordnet sind, kann so verstanden werden, dass die Symmetrieachse jedes Basisteils mit der Symmetrieachse jedes benachbarten Basisteils einen Winkel bildet, der gleich dem Quotienten aus 360° und der Anzahl der Basisteile des Rotorblechs ist.

Vorteilhaft ist es darüber hinaus, wenn im Fall asymmetrisch verteilter Fortsätze benachbarte Fortsätze paarweise zu jeweils einem Paar zusammengefasst werden und eine identische Asymmetrie aufweisen (das heißt, zwischen benachbarten Fortsätzen der Paare liegt jeweils der gleiche Winkel, der dem Quotienten aus 360° und der Anzahl der Fortsätze des Rotorblechs entsprechen kann). Vorteilhaft ist es auch, wenn im Fall asymmetrisch verteilter Kopfteile benachbarte Kopfteile paarweise zu jeweils einem Paar zusammengefasst werden und eine identische Asymmetrie aufweisen (das heißt, zwischen benachbarten Kopfteilen der Paare liegt jeweils der gleiche Winkel, der dem Quotienten aus 360° und der Anzahl der Kopfteile des Rotorblechs entsprechen kann). Dadurch kann eine Glättung des Drehmomentverlaufs bei vergleichsweise geringer Asymmetrie des Rotorblechpakets erreicht werden.

Besonders vorteilhaft ist es zudem, wenn eines der Paare Fortsätze aufweist, bei welchen die Kopfteile symmetrisch zum jeweiligen Basisteil angeordnet sind.

Dadurch kann im Rotorblechpaket insgesamt eine hohe Asymmetrie erreicht werden, da bei einem der Paare keine Asymmetrie des Kopfteils vorliegt. Die übrigen Paare können zu diesem Paar daher relativ stark verdreht werden. Es ergibt sich dadurch eine sehr gute Glättung des Drehmomentverlaufs.

Weiterhin ist es von Vorteil, wenn einander gegenüberliegende Paare eine identische Asymmetrie aufweisen. Dadurch kann eine Glättung des Drehmomentverlaufs bei noch geringer Asymmetrie des Rotorblechpakets erreicht werden.

Besonders vorteilhaft ist es in diesem Zusammenhang auch, wenn zwei gegenüberliegende Paare Fortsätze aufweisen, bei welchen die Kopfteile symmetrisch zum jeweiligen Basisteil angeordnet sind. Dadurch kann im Rotorblechpaket ebenfalls insgesamt eine hohe Asymmetrie erreicht werden, da bei zwei Paaren der Paare keine Asymmetrie des Kopfteils vorliegt. Die übrigen Paare können zu diesen Paaren daher relativ stark verdreht werden. Es ergibt sich dadurch wiederum eine sehr gute Glättung des Drehmomentverlaufs.

Schließlich ist es günstig, wenn die Asymmetrie mehrerer (insbesondere aller) aufeinander folgender Paare entlang dem Umfang
- beginnend bei jenem Paar mit der geringsten Asymmetrie stufenweise zunimmt oder
- beginnend bei jenem Paar mit der höchsten Asymmetrie stufenweise abnimmt.

Dadurch kann eine Glättung des Drehmomentverlaufs besonders gut erzielt werden, da die Pole oder Fortsätze über den gesamten Umfang asymmetrisch verteilt sind.

### KURZE BESCHREIBUNG DER FIGUREN

Ausführungsbeispiele der Erfindung sind exemplarisch in den beigefügten schematischen Figuren dargestellt. Es zeigen:
- Fig. 1: eine fremderregte elektrische Synchronmaschine im Halbschnitt;
- Fig. 2: eine Vorderansicht einer Rotor-Stator-Anordnung;
- Fig. 3: einen Rotor, bei welchem benachbarte Fortsätze paarweise eine identische Asymmetrie aufweisen;
- Fig. 4: einen Rotor, bei welchem gegenüberliegende Paare von Fortsätzen eine identische Asymmetrie aufweisen;
- Fig. 5: einen Rotor, bei welchem benachbarte Kopfteile eine identische Asymmetrie aufweisen;
- Fig. 6: einen Rotor, bei welchem gegenüberliegende Paare von Kopfteilen eine identische Asymmetrie aufweisen und
- Fig. 7: eine elektrische Maschine der vorgeschlagenen Art, welche in ein Fahrzeug eingebaut ist.

### DETAILIERTE BESCHREIBUNG DER ERFINDUNG

Einführend wird festgehalten, dass gleiche Teile in den unterschiedlich Ausführungsformen mit denselben Bezugszeichen beziehungsweise Bauteilbezeichnungen versehen werden, gegebenenfalls mit unterschiedlichen Indizes. Die in der Beschreibung enthalten Offenbarung eines Bauteils kann sinngemäß auf ein anderes Bauteil mit demselben Bezugszeichen beziehungsweise derselben Bauteilbezeichnung übertragen werden. Auch sind die in der Beschreibung gewählten Lageangaben, wie zum Beispiel "oben", "unten", "hinten", "vorne", "seitlich" und so weiter auf die unmittelbar beschriebene sowie dargestellte Figur bezogen und bei einer Lageänderung sinngemäß auf die neue Lage zu übertragen.

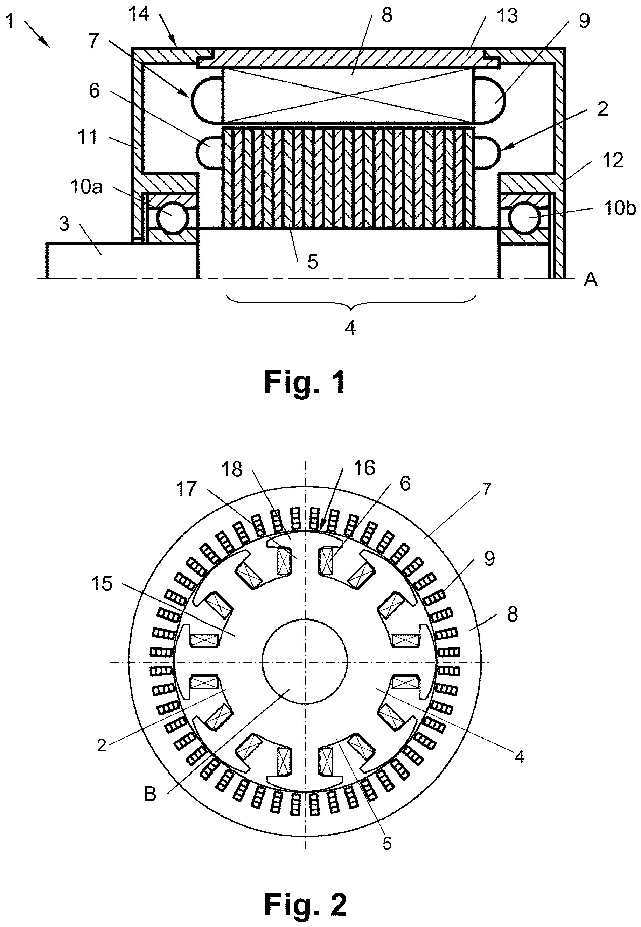

Fig. 1 zeigt einen Halbschnitt durch eine schematisch dargestellte elektrische Maschine 1, welche als fremderregte elektrische Synchronmaschine ausgebildet ist. Die elektrische Maschine 1 umfasst, einen Rotor 2 mit einer Rotorwelle 3 und einem auf der Rotorwelle 3 sitzenden Rotorblechpaket 4 mit mehreren aufeinander gestapelten Rotorblechen 5 und mehreren darin beziehungsweise daran angeordneten Erregerwicklungen 6. Die elektrische Maschine 1 umfasst weiterhin einen Stator 7 mit einem Statorblechpaket 8 mit mehreren Statorblechen, die in diesem Beispiel nicht im Einzelnen dargestellt sind, sowie in beziehungsweise an diesen angeordnete Statorwicklungen 9. Der Rotor 2 beziehungsweise die Rotorwelle 3 ist mit Hilfe von Lagern 10a, 10b um eine Rotationsachse A gegenüber dem Stator 7 drehbar gelagert. Konkret sitzt das erste Lager 10a in einem ersten Lagerschild 11 und das zweite Lager 10b in einem zweiten Lagerschild 12. Weiterhin umfasst die elektrische Maschine 1 ein (mittleres) Gehäuseteil 13, welches das erste Lagerschild 11 und das zweite Lagerschild 12 verbindet und den Stator 7 aufnimmt. Das erste Lagerschild 11, das zweite Lagerschild 12 und das Gehäuseteil 13 bilden in diesem Beispiel das Gehäuse 14 der elektrische Maschine 1.

Die Fig. 2 zeigt eine beispielhafte Rotor-Stator-Anordnung in Vorderansicht. Die Anordnung umfasst den Stator 7 mit dem Statorblechpaket 8 und den darin angeordneten Statorwicklungen 9 sowie den darin angeordneten Rotor 2 mit dem Rotorblechpaket 4 und den darin angeordneten Erregerwicklungen 6, welche jeweils um mehrere Basisteile 17 gewunden sind. In der Fig. 2 ist dabei das vorderste Rotorblech 5 des Rotorblechpakets 4 zu sehen. Das Rotorblech 5 umfasst einen ringförmigen Innenteil 15 mit mehreren sternförmig nach außen weisenden Fortsätzen 16, wobei jeder Fortsatz 16 einen an den Innenteil 15 anschließenden Basisteil 17 und einen daran anschließenden breiteren Kopfteil 18 aufweist. Durch Aufeinanderstapeln mehrerer Rotorbleche 5 ergibt sich das Rotorblechpaket 4. Dabei liegen die Basisteile 17 der Fortsätze 16 jeweils deckungsgleich übereinander.

Generell sind zumindest einige der Fortsätze 16 oder zumindest einige der Kopfteile 18 asymmetrisch (beziehungsweise ungleichmäßig) über den Umfang (beziehungsweise entlang des Umfangs) des Rotorblechs 5 verteilt. Das heißt, zumindest einige der Fortsätze 16 oder zumindest einige der Kopfteile 18 sind um unterschiedliche Winkel um die Rotationsachse A des Rotorblechs 5 beziehungsweise des Rotorblechpakets 4 gegeneinander verdreht.

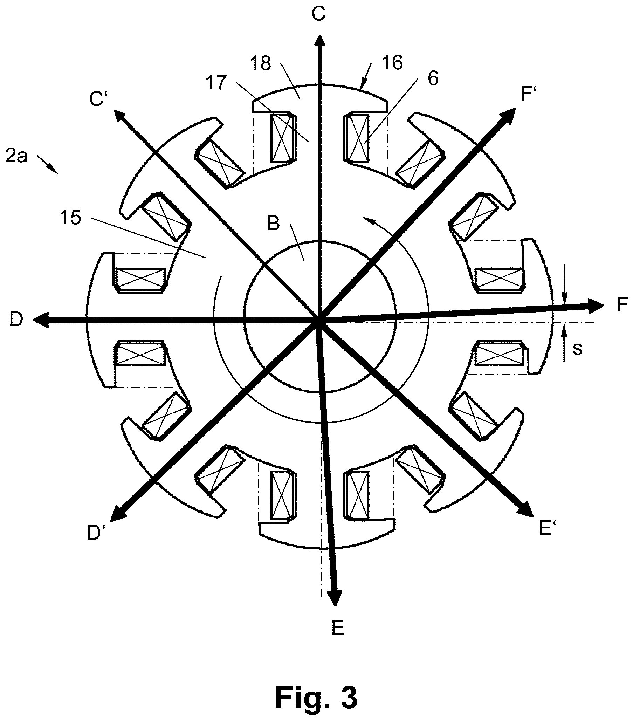

Die Fig. 3 bis 6 zeigen dazu einige unterschiedliche Ausführungsbeispiele. Fig. 3 zeigt eine Ausführungsform eines Rotors 2a, bei welcher die Kopfteile 18 asymmetrisch über den Umfang des ringförmigen Innenteils 15 verteilt sind und bei welcher benachbarte Kopfteile 18 paarweise zu jeweils einem Paar C..F' zusammengefasst werden und eine identische Asymmetrie aufweisen. Mit anderen Worten, liegt zwischen benachbarten Kopfteilen 18 eines Paares C..F' jeweils der gleiche Winkel, welcher dem Quotienten aus 360° und der Anzahl der Fortsätze (8) entspricht, und somit 45° beträgt. In dem in Fig. 3 dargestellten Beispiel ergeben sich dabei die Paare C/C', D/D', E/E' und F/F'. In der Fig. 3 sind zudem die Symmetrieachsen für jedes Kopfteil 18 als Pfeile eingezeichnet.

Eines der Paare C..F', nämlich das Paar C/C', weist in diesem Beispiel Fortsätze 16 auf, bei welchen die Kopfteile 18 symmetrisch zum jeweiligen Basisteil 17 angeordnet sind. Mit anderen Worten beträgt die Asymmetrie dieser Fortsätze 16 Null.

Beginnend bei dem Paar C/C' mit der geringsten Asymmetrie nimmt die Asymmetrie mehrerer (hier aller) aufeinander folgender Paare C..F' entlang dem Umfang stufenweise zu (in diesem Fall im Gegenuhrzeigersinn). Beginnend bei dem Paar F/F' mit der höchsten Asymmetrie nimmt die Asymmetrie mehrerer (hier aller) aufeinanderfolgender Paare C..F' entlang dem Umfang stufenweise ab (in diesem Fall im Uhrzeigersinn). Stellvertretend ist die Verdrehung s für das Paar F/F' in der Fig. 3 explizit bezeichnet.

Ein weiteres Merkmal der in der Fig. 3 dargestellten Ausführungsform besteht darin, dass die (hier alle) Basisteile 17 symmetrisch um den Umfang angeordnet sind. Das heißt, die Basisteile 17 sind um jeweils denselben Winkel von 45 Grad gegeneinander verdreht.

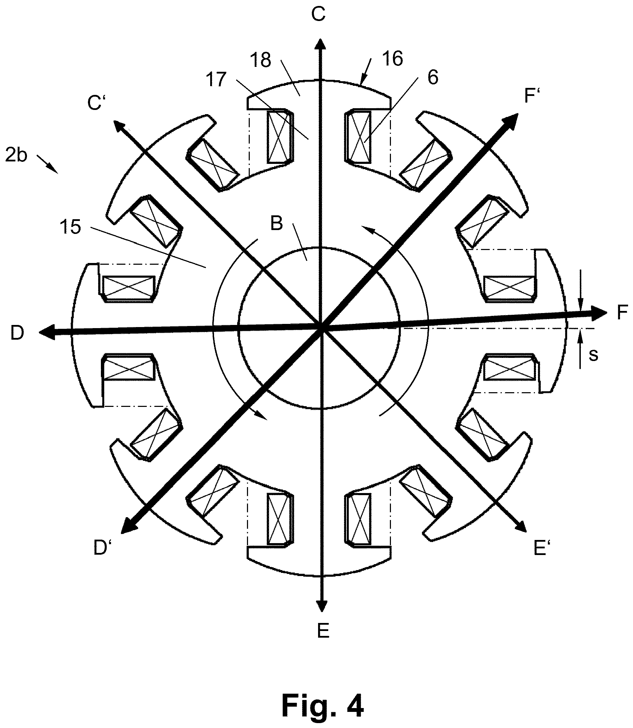

Fig 4 zeigt eine zu Fig. 3 leicht abgewandelte Ausführungsform eines Rotors 2b. Dabei weisen einander gegenüberliegende Paare C..F' eine identische Asymmetrie auf. Konkret, weisen die Paare C/C' und E/E' sowie die Paare D/D' und F/F' jeweils eine identische Symmetrie auf. Die Basisteile 17 sind dabei wiederum symmetrisch um den Umfang angeordnet.

Zwei der Paare C..F', nämlich die Paare C/C' und E/E', weisen in diesem Beispiel Fortsätze 16 auf, bei welchen die Kopfteile 18 symmetrisch zum jeweiligen Basisteil 17 angeordnet sind. Mit anderen Worten sie diese Fortsätze 16 in sich symmetrisch.

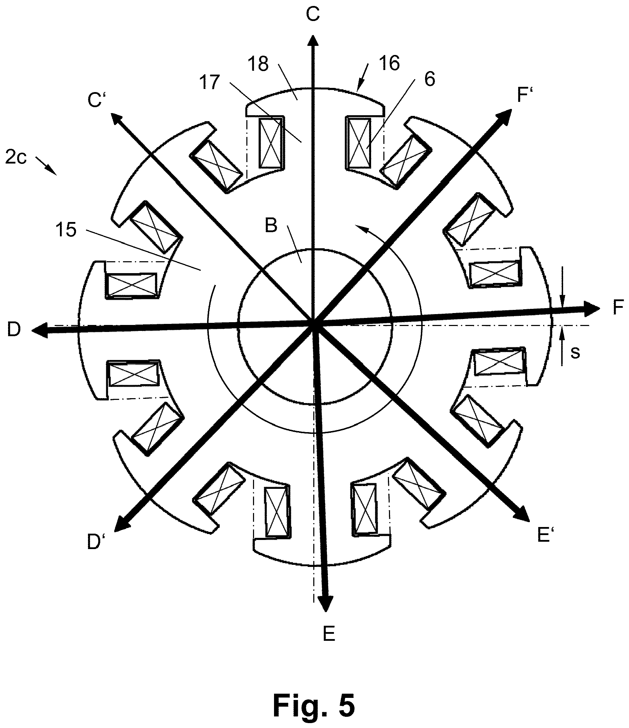

Fig. 5 zeigt nun eine Ausführungsform eines Rotors 2c, bei welchem die Fortsätze 16 asymmetrisch über den Umfang des ringförmigen Innenteils 15 verteilt sind und bei welcher benachbarte Fortsätze 16 paarweise zu jeweils einem Paar C..F' zusammengefasst werden und eine identische Asymmetrie aufweisen. Mit anderen Worten, liegt zwischen benachbarten Fortsätzen 16 eines Paares C..F' jeweils der gleiche Winkel von 45°. In dem in Fig. 5 dargestellten Beispiel ergeben sich dabei wiederum die Paare C/C', D/D', E/E' und F/F'. In der Fig. 5 sind zudem die resultierenden Symmetrieachsen der Fortsätze 16 als Pfeile eingezeichnet.

Beginnend bei dem Paar C/C' mit der geringsten Asymmetrie nimmt die Asymmetrie mehrerer (hier aller) aufeinander folgender Paare C..F' entlang dem Umfang stufenweise zu (in diesem Fall im Gegenuhrzeigersinn). Beginnend bei dem Paar F/F' mit der höchsten Asymmetrie nimmt die Asymmetrie mehrerer (hier aller) aufeinanderfolgender Paare C..F' entlang dem Umfang stufenweise ab (in diesem Fall im Uhrzeigersinn). Stellvertretend ist die Verdrehung s für das Paar F/F' in der Fig. 5 explizit bezeichnet.

Ein weiteres Merkmal der in der Fig. 5 dargestellten Ausführungsform besteht darin, dass die Fortsätze 16 in sich symmetrisch sind. Das heißt die Kopfteile 18 sind symmetrisch zum jeweiligen Basisteil 17 angeordnet.

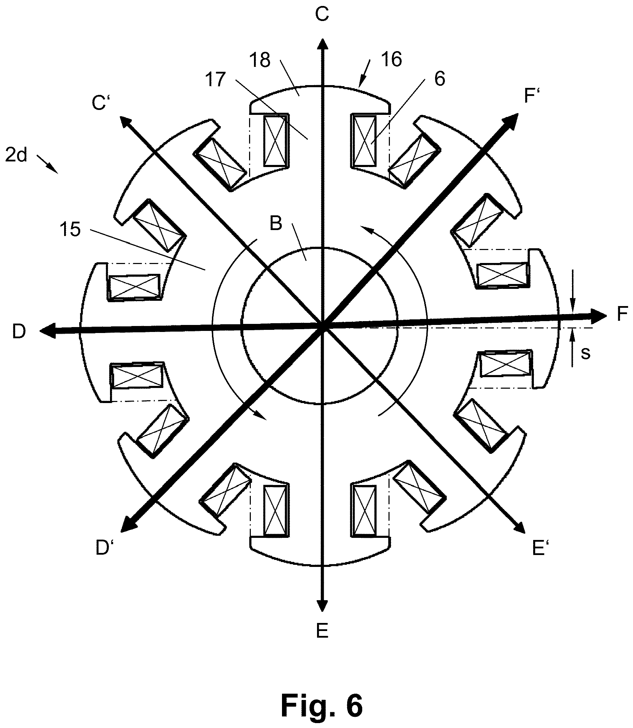

Fig. 6 zeigt eine zu Fig. 5 leicht abgewandelte Ausführungsform eines Rotors 2d. Dabei weisen einander gegenüberliegende Paare C..F' eine identische Asymmetrie auf. Konkret, weisen die Paare C/C' und E/E' sowie die Paare D/D' und F/F' jeweils eine identische Symmetrie auf. Die Fortsätze 16 sind wiederum in sich symmetrisch, das heißt die Kopfteile 18 sind symmetrisch zum jeweiligen Basisteil 17 angeordnet.

Denkbar wäre auch eine Kombination der in Fig. 3 oder 4 dargestellten Ausführungsform mit der in Fig. 5 oder 6 dargestellten Ausführungsform. Demgemäß könnten sowohl die Basisteile 17 zumindest teilweise asymmetrisch über den Umfang des ringförmigen Innenteils 15 verteilt sein, und zusätzlich könnten zumindest einige der Kopfteile 18 asymmetrisch gegenüber dem jeweiligen Basisteil 17 angeordnet sein. Beispielsweise könnte konkret die in Fig. 3 dargestellten Ausführungsform mit der in Fig. 5 dargestellten Ausführungsform kombiniert werden, wodurch sich durch die zusätzlich asymmetrisch gegenüber dem jeweiligen Basisteil 17 angeordneten Kopfteile 18 eine größere Asymmetrie des Rotorblechpakets 4 erreichen lässt. Dasselbe gilt für eine Kombination der in Fig. 4 dargestellten Ausführungsform mit der in Fig. 6 dargestellten Ausführungsform.

Bei den in Fig. 3 bis 6 dargestellten Beispielen sind die Fortsätze 16 beziehungsweise die Kopfteile 18 paarweise zusammengefasst. Dies ist zwar von Vorteil, aber nicht zwingend. Denkbar wäre auch, dass die Asymmetrie des Rotorblechpakets 4 ohne paarweise Zusammenfassung erzielt wird.

An dieser Stelle wird auch angemerkt, dass sich der Begriff "Asymmetrie" im Rahmen der Offenbarung stets auf eine Beobachtungsrichtung / Axialrichtung bezieht. Beispielsweise kann die Beobachtungsrichtung in der Fig. 3 bis 6 in die Ebene des Zeichnungsblatts hinein sein.

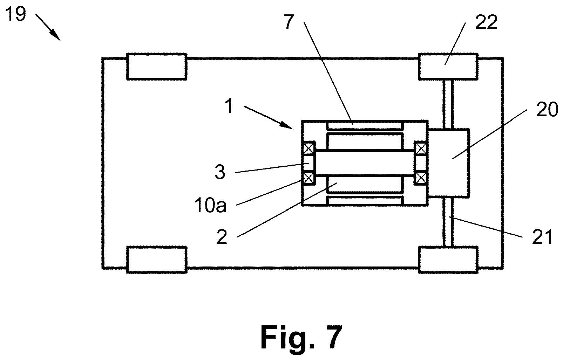

Die Fig. 7 zeigt schließlich die in ein Fahrzeug 19 eingebaute elektrische Maschine 1. Das Fahrzeug 19 weist zwei Achsen auf, von denen eine angetrieben ist. Konkret ist die elektrische Maschine 1 über ein optionales Getriebe 20 mit den Halbachsen 21 der Hinterachse verbunden. An den Halbachsen 21 sind schließlich die angetriebenen Räder 22 montiert. Die elektrische Maschine 1, das Getriebe 20 und die Halbachsen 21 sind dabei Teil des Antriebsstrangs des Fahrzeugs 19. Der Antrieb des Fahrzeugs 19 erfolgt zumindest teilweise oder zeitweise durch die elektrische Maschine 1. Das heißt, die elektrische Maschine 1 kann zum alleinigen Antrieb des Fahrzeugs 19 dienen oder zum Beispiel im Verbund mit einer Verbrennungskraftmaschine vorgesehen sein (Hybridantrieb).

Durch die Asymmetrie des Erregerfelds kann ein Drehmomentverlauf der vorgestellten elektrischen Maschine 1 geglättet und eine Neigung zum "Einrasten" bei bestimmten Drehwinkeln vermieden oder zumindest verringert werden. Auf eine Schrägung des Rotorblechpakets 4 kann dabei verzichtet werden. Das heißt, die Pole oder Fortsätze 16 können axial ausgerichtet werden, wodurch auch die Wicklungsdrähte der Erregerwicklung in axialer Richtung verlaufen können und wodurch die Herstellung der Erregerwicklung 6 technisch vergleichsweise einfach ist.

Abschließend wird festgehalten, dass der Schutzbereich durch die Patentansprüche bestimmt ist. Die Beschreibung und die Zeichnungen sind jedoch zur Auslegung der Ansprüche heranzuziehen. Die in den Figuren enthaltenen Merkmale können beliebig ausgetauscht und miteinander kombiniert werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenliste

- 1: fremderregte elektrische Synchronmaschine
- 2, 2a..2d: Rotor
- 3: Rotorwelle
- 4: Rotorblechpaket
- 5: Rotorblech
- 6: Rotorwicklung / Erregerwicklung
- 7: Stator
- 8: Statorblechpaket
- 9: Statorwicklung
- 10a, 10b: Lager
- 11: erstes Lagerschild
- 12: zweites Lagerschild
- 13: (mittleres) Gehäuseteil
- 14: Gehäuse
- 15: ringförmiger Innenteil
- 16: Fortsatz
- 17: Basisteil
- 18: Kopfteil
- 19: Fahrzeug
- 20: Getriebe
- 21: Halbachse
- 22: Rad

- A: Drehachse
- B: Wellenbohrung
- C.. F': Paar zweier benachbarter Fortsätze
- s: Verdrehung / Verschiebung

## Patentansprüche

1. Rotorblech (5) für ein Rotorblechpaket (4) eines Rotors (2, 2a..2d) einer fremderregten elektrischen Synchronmaschine (1), umfassend einen ringförmigen Innenteil (15) mit mehreren sternförmig nach außen weisenden Fortsätzen (16), wobei jeder Fortsatz (16) einen an den Innenteil (15) anschließenden Basisteil (17) und einen daran anschließenden breiteren Kopfteil (18) aufweist, **dadurch gekennzeichnet, dass**
- zumindest einige der Fortsätze (16) oder zumindest einige der Kopfteile (18) asymmetrisch über den Umfang des Rotorblechs (5) verteilt sind.

2. Rotorblech (5) nach Anspruch 1, **dadurch gekennzeichnet, dass** im Fall zumindest einiger asymmetrisch verteilter Fortsätze (16) die Kopfteile (18)
- symmetrisch zum jeweiligen Basisteil (17) angeordnet sind oder
- asymmetrisch zum jeweiligen Basisteil (17) angeordnet sind.

3. Rotorblech (5) nach Anspruch 1 oder 2, **dadurch gekennzeichnet, dass** im Fall zumindest einiger asymmetrisch verteilter Kopfteile (18) die Basisteile (17) symmetrisch um den Umfang angeordnet sind.

4. Rotorblech (5) nach einem der Ansprüche 1 bis 3, **dadurch gekennzeichnet, dass** im Fall asymmetrisch verteilter Fortsätze (16) benachbarte Fortsätze (16) paarweise zu jeweils einem Paar (C..F') zusammengefasst werden und eine identische Asymmetrie aufweisen und im Fall asymmetrisch verteilter Kopfteile (18) benachbarte Kopfteile (18) paarweise zu jeweils einem Paar (C..F') zusammengefasst werden und eine identische Asymmetrie aufweisen.

5. Rotorblech (5) nach Anspruch 4, **dadurch gekennzeichnet, dass** eines der Paare (C..F') Fortsätze (16) aufweist, bei welchen die Kopfteile (18) symmetrisch zum jeweiligen Basisteil (17) angeordnet sind.

6. Rotorblech (5) nach Anspruch 4 oder 5, **dadurch gekennzeichnet, dass** einander gegenüberliegende Paare (C..F') eine identische Asymmetrie aufweisen.

7. Rotorblech (5) nach einem der Ansprüche 4 bis 6, **dadurch gekennzeichnet, dass** zwei gegenüberliegende Paare (C..F') Fortsätze (16) aufweisen, bei welchen die Kopfteile (18) symmetrisch zum jeweiligen Basisteil (17) angeordnet sind.

8. Rotorblech (5) nach einem der Ansprüche 4 bis 7, **dadurch gekennzeichnet, dass** die Asymmetrie mehrerer aufeinanderfolgender Paare (C..F') entlang dem Umfang
- beginnend bei jenem Paar (C..F') mit der geringsten Asymmetrie stufenweise zunimmt oder
- beginnend bei jenem Paar (C..F') mit der höchsten Asymmetrie stufenweise abnimmt.

9. Rotorblechpaket (4) für einen Rotor (2, 2a..2d) einer fremderregten elektrischen Synchronmaschine (1), **gekennzeichnet durch** mehrere aufeinander gestapelte Rotorbleche (5) nach einem der Ansprüche 1 bis 8, wobei die Fortsätze (16) jeweils deckungsgleich übereinanderliegen.

10. Rotor (2, 2a..2d) für eine fremderregte elektrische Synchronmaschine (1), **gekennzeichnet durch** eine Rotorwelle (3), ein auf der Rotorwelle (3) angeordnetes Rotorblechpaket (4) nach Anspruch 9 sowie mehrere Erregerwicklungen (6), welche jeweils um mehrere Basisteile (17) gewunden sind.

11. Fremderregte elektrische Synchronmaschine (1) mit einem Stator (7), **gekennzeichnet durch** einen in dem Stator (7) angeordneten Rotor (2, 2a..2d) nach Anspruch 10, der gegenüber dem Stator (7) um die Rotationsachse (A) des Rotors (2, 2a..2d) drehbar gelagert ist.

12. Fahrzeug (20) mit einem Antriebsstrang, der eine fremderregte elektrische Synchronmaschine (1) nach Anspruch 11 aufweist, die zum Antreiben des Fahrzeugs (20) vorgesehen ist.
